**Europäisches Patentamt**

**European Patent Office**

**Office européen des brevets**

(19)

(11) Veröffentlichungsnummer : **0 268 577 B2**

(12) ## NEUE EUROPÄISCHE PATENTSCHRIFT

(45) Veröffentlichungstag der neuen Patentschrift :
**21.10.92 Patentblatt 92/43**

(51) Int. Cl.⁵ : **B62D 49/02**

(21) Anmeldenummer : **87890260.0**

(22) Anmeldetag : **18.11.87**

(54) **Ladekippschaufel.**

(30) Priorität : **19.11.86 AT 3080/86**
**24.09.87 AT 2414/87**
**11.08.87 AT 2018/87**

(43) Veröffentlichungstag der Anmeldung :
**25.05.88 Patentblatt 88/21**

(45) Bekanntmachung des Hinweises auf die
Patenterteilung :
**27.12.89 Patentblatt 89/52**

(45) Bekanntmachung des Hinweises auf die
Entscheidung über den Einspruch :
**21.10.92 Patentblatt 92/43**

(84) Benannte Vertragsstaaten :
**AT CH DE FR IT LI**

(56) Entgegenhaltungen :
**AT-B- 187 797**
**AT-B- 189 935**
**DE-A- 3 107 228**
**GB-A- 729 863**
**Prospekt "Les bennes multi-services" der Fir-**
**ma ETs Desvoys et Fils**
**Preisliste "Tarif no 34" vom November 1982**
**der Firma ETs Desvoys etFils**

(73) Patentinhaber : **Wolfgang Thausing Stahl-u.**
**Kunststoffbau**
**Zinsdorf 7**
**A-9064 Pischeldorf (AT)**

(72) Erfinder : **Thausing, Wolfgang**
**Zinsdorf 7**
**A-9064 Pischeldorf (AT)**

(74) Vertreter : **Beer, Manfred, Dipl.-Ing. et al**
**Lindengasse 8**
**A-1070 Wien (AT)**

EP 0 268 577 B2

**Beschreibung**

Die Erfindung betrifft eine Ladekippschaufel, die an einem Kraftfahrzeug, insbesondere einem Ackerschlepper über dessen Dreipunkt-Aufhängung zu befestigen ist, und die um eine quer zur Fahrtrichtung ausgerichtete, horizontale Achse kippbar ist, mit den Merkmalen des einleitenden Teils von Anspruch 1.

Eine aus der GB-A-729 863 bekannte Ladekippschaufel kann über die Dreipunktaufhängung des Baggerschleppers gehoben und gesenkt werden. Um die Schaufel zu kippen, ist ein Hebel am Oberlenker zu betätigen, so daß sich der oberlenker teleskopartig verlängern kann und die Schaufel um eine quer zum Fahrzeug ausgerichtete, horizontale Achse nach unten gekippt werden kann. Nachteilig bei dieser bekannten Ladekippschaufel ist, daß ihr Hubbereich beschränkt ist, und daß der teleskopartig verlängerbare oberlenker nach dem Abkippen von Hand aus wieder in eine verkürzte Stellung zurückgeführt werden muß.

Aus dem Prospekt "Les bennes multi-services" der Ets Desvoys et Fils ist eine Ladekippschaufel mit den im einleitenden Teil des Anspruches 1 genannten Merkmalen bekannt. Bei der bekannten Ladekippschaufel greift ein Hydraulikzylinder an einem mit den Armen gelenkig verbundenen Lenkern an. Der Lenker ist überdies an ihren freien Enden über Zugstangen mit der Schaufel verbunden. Beim Betätigen des Hydraulikzylinders wird die Anordnung aus dem Lenker und den Zugstangen gestreckt und die Schaufel gekippt.

Der Erfindung liegt die Aufgabe zugrunde, eine Ladekippschaufel der eingangs genannten Gattung so weiter zu bilden, daß die kinematischen Verhältnisse beim Kippen der Schaufel günstiger sind als im Stand der Technik.

Erfindungsgemäß wird dies mit einer Ladekippschaufel erreicht, welche die Merkmale von Anspruch 1 aufweist.

Durch die erfindungsgemäße Anordnung der Kippachse ergeben sich beim Kippen der Schaufel insgesamt günstigere Verhältnisse, da sich deren freies Ende nicht bzw. weniger absenkt als bei der Ladekippschaufel gemäß der GB-A-729 863. Darüberhinaus wird beim Kippen der Horizontalabstand zwischen dem Schwerpunkt der Schaufel und von allenfalls auf der Schaufel befindlichem Gut und der Kippachse kleiner, so daß das Kippen zunehmend leichter und mit weniger Kraftaufwand durchführbar ist. Durch die erfindungsgemäße Ausführung der Ladekippschaufel ergeben sich beim Kippen der Ladekippschaufel durch den Druckmittelmotor besonders günstige Verhältnisse und der Druckmittelmotor ist bei nicht hochgekippter Ladekippschaufel besonders raumsparend zwischen den beiden Armen, an welchen die Ladekippschaufel verschwenkbar befestigt ist, angeordnet ist.

Zur Optimierung der kinematischen Verhältnisse und der Bewegungsabläufe kann die Ausführungsform gemäß Anspruch 2 verwirklicht werden.

Die Rückbewegung in die Ausgangslage der Ausführungsform gemäß den Ansprüchen 1 und/oder 2 wird durch die Maßnahmen des Anspruches 3 verbessert. Eine bevorzugte Ausführungsform hiezu betrifft Anspruch 4.

Wenn die Maßnahme des Anspruches 5 verwirklicht ist, dann kann die Schaufel durch Anheben der freien Enden der Arme, an denen sie kippar gelagert ist, höher angehoben werden, um beispielsweise auch Gut in weiter höher liegende Auffangbehälter od.dgl. abkippen zu können. Dabei ist es durch gleichzeitige Betätigung des Antriebsorgans und des als Druckmittelmotor ausgebildeten Oberlenkers auch möglich, die Ladekippschaufel unter Beibehaltung einer im wesentlichen horizontalen Stellung der Schaufel hochzuheben.

Die Bewegungsmöglichkeiten der erfindungsgemäßen Ladekippschaufel werden weiter vermehrt, wenn die Konstruktion gemäß Anspruch 6 verwirklicht ist.

Wenn das Merkmal des Anspruches 7 verwirklicht ist, dann brauchen die Antriebsorgane eine doppeltwirkenden Linearmotore sein, sondern können beispielsweise als einfache Druckmittelmotore ausgebildet sein.

Weitere Einzelheiten und Merkmale der Erfindung ergeben sich aus der nachstehenden Beschreibung des in den Zeichnungen gezeigten Ausführungsbeispieles der erfindungsgemäßen Ladekippschaufel.

Es zeigen:

Figur 1 eine Ausführungsform einer Ladekippschaufel und die

Figuren 2 bis 5 verschiedene Arbeitsstellungen der in Figur 10 gezeigten Ladekippschaufel.

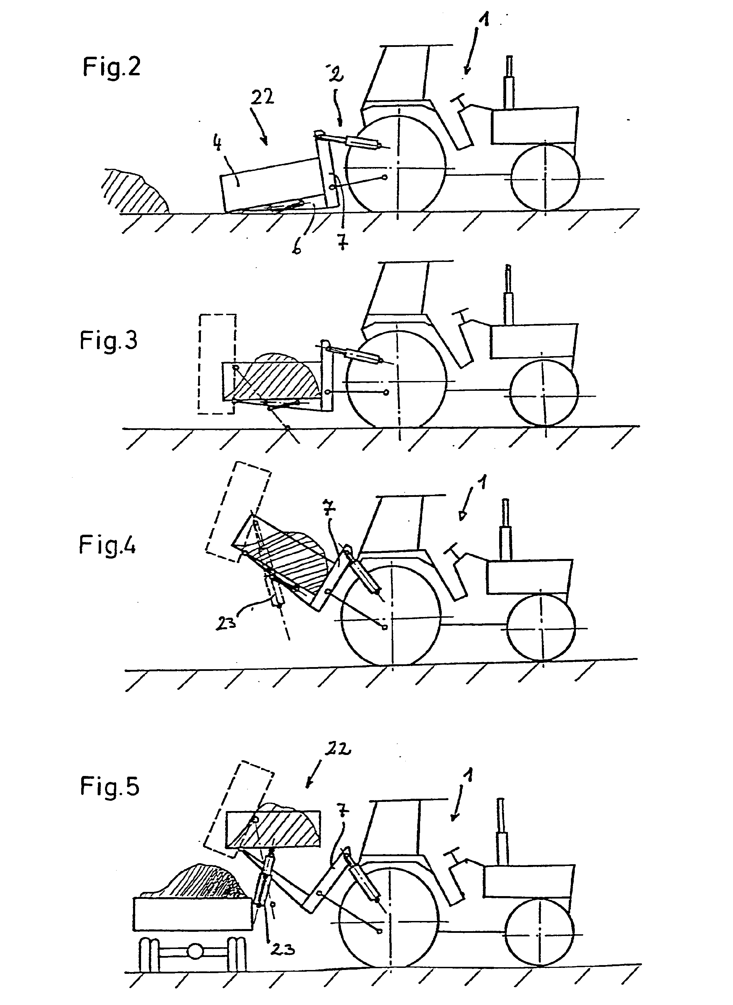

In Figur 2 ist ein Ackerschlepper 1 (Traktor) gezeigt, an dessen Dreipunktaufhängung 2 eine Ladekippschaufel 22 befestigt ist. Die eigentliche Schaufel 4 ist an den freien Enden 5 von zwei Armen 6 um eine horizontale Achse kippbar befestigt. Die Arme 6 gehen von einem Rahmen 7 aus, der in Fahrtrichtung gesehen im wesentlichen dreieckförmig ausgebildet ist und einen unteren horizontalen Schenkel und zwei zur Spitze 8 zusammenlaufende schräge Schenkel aufweist. Der Rahmen 7 ist unten über zwei Stützstreben 9 und oben über einen Druckmittelmotor 10 mit der Dreipunktaufhängung 2 des Ackerschleppers 1 verbunden. Um die Schaufel 4 aus der in Figur 2 gezeigten Lage in eine gegenüber den Armen 6 gekippten Lage, wie in den Figuren 3 bis 5 strichliert gezeigt, zu verschwenken, ist ein Druckmittelmotor 23 vorgesehen.

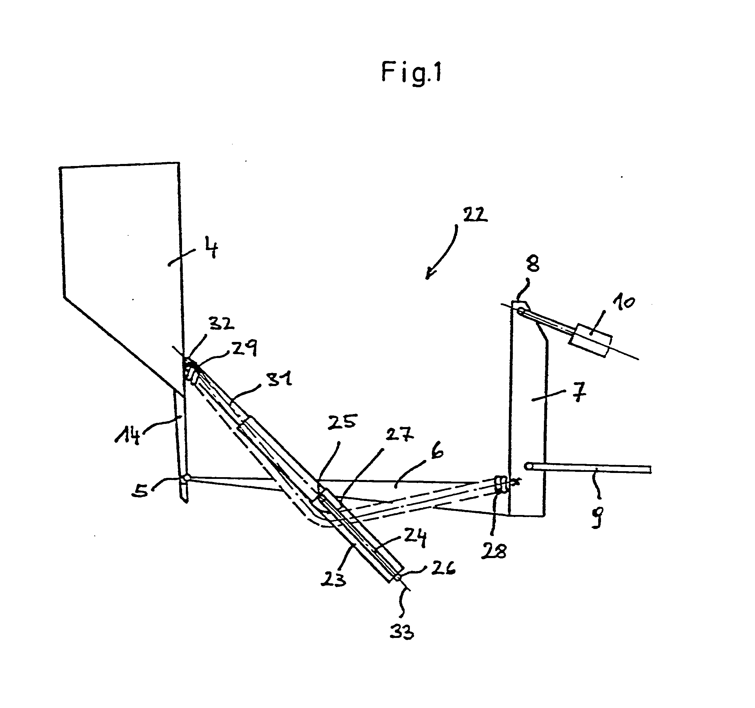

Die Schaufel 4 kann an ihrem über die freien Enden 5 der Arme 6 hinausragenden Bereich mit Zinken 14 ausgestattet sein (siehe Figur 1), die das Aufnehmen von Ladegut erleichtern.

Die Ladekippschaufel 22 kann aus der in Figur 2 gezeigten Lage, in der der vom Ackerschlepper 1 abgekehrte Rand der Schaufel 4 am Boden aufliegt, durch Betätigen des Druckmittelmotors 10 in die in Figur 3 gezeigte Lage verschwenkt werden, in der der Rahmen 7 im wesentlichen lotrecht ausgerichtet ist. Durch weiteres Verkürzen des Druckmittelmotors 10 kann der Rahmen 7 weiter verschwenkt werden, so daß die freien Enden 5 der Arme 6 angehoben werden. Dies kann beispielsweiose dazu benutzt werden, um aus der Schaufel 4, wie in Figur 5 gezeigt, Gut in ein Kraftfahrzeug oder einen Anhänger abzukippen. Dabei ist die gekippte Lage der Schaufel 4 strichliert eingezeichnet.

Aus Figur 5 ist auch ersichtlich, daß durch gemeinsames Betätigen der Druckmittelmotore 10 und 23 die Schaufel 4 auch beim Anheben der freien Enden 5 der Arme 6 horizontal gehalten werden kann.

Wie in Figur 1 gezeigt, ist der zum Kippen der Schaufel 4 vorgesehene, über Lenker 24 mit den Armen 6, an deren freien Enden 5 die Schaufel 4 verschwenkbar befestigt ist, gekuppelt. Die Lenker 24 sind in Anlenkpunkten 25 gelenkig mit den Armen 6 verbunden. An ihren den Anlenkpunkten 25 gegenüberliegenden Enden 26 sind die Lenker 24 mit dem unteren Ende des Druckmittelmotors 23 verschwenkbar verbunden.

Auf beiden Seiten des Zylindermantels des Druckmittelmotors 23 ist wenigstens ein Gleitblech 27 oder eine Umlenkrolle vorgesehen, auf dem von unten her eine Zugfeder 28 (oder zwei Zugfedern) anliegt, deren Ende 29 an der Unterseite der Schaufel 4 und deren anderes Ende 30 im Bereich des unteren horizontalen Schenkels des Rahmens 7 befestigt ist. Die Kolbenstange 31 des Druckmittelmotors 23 greift ebenfalls an der Unterseite der Schaufel 4 an.

Wie sich aus Figur 2 ergibt, ist der Druckmittelmotor 23 bei in die Ruhelage gekippter Schaufel 4 (Figur 2) vollständig zwischen den Armen 6 aufgenommen. Falls der Druckmittelmotor 23 mit Druckmittel beaufschlagt wird, und die Schaufel 4 zu kippen beginnt, nimmt er die in den Figuren 4 und 5 schematisch angedeuteten Stellungen ein, in welchen die Punkte 25, 26 und der Angriffspunkt 32 der Kolbenstange 31 in einer Ebene 33 liegen. Dadurch ergeben sich beim Hochkippen der Schaufel 4 besonders günstige kinematische Verhältnisse, ohne daß die raumsparende Anordnung des Druckmittelmotors 23 beeinträchtigt wird.

Durch die Zugfeder 28 wird das Rückklappen der Schaufel 4 beschleunigt oder, wenn es sich beim Druckmittelmotor 23 um einen einfach wirkenden Druckmittelmotor handelt, überhaupt erst ermöglicht. Wenn ein doppelt wirkender Druckmittelmotor 23 verwendet wird, ist die Feder 28 entbehrlich.

**Patentansprüche**

1. Ladekippschaufel (22), die an einem Kraftfahrzeug, insbesondere an einem Ackerschlepper (1), über dessen Dreipunktaufhängung (2) zu befestigen ist, wobei die Schaufel (4) an Armen (6) kippbar gelagert ist, die von einem an der Dreipunktaufhängung (2) befestigten und in der Grundstellung im wesentlichen senkrecht zur Fahrebene angeordneten Rahmen (7) rechtwinklig vom Fahrzeug wegragen, und wobei die Kippachse, die quer zur Fahrtrichtung ausgerichtet und horizontal ist, in der vom Rahmen (7) entfernten Hälfte der Arme, vorzugsweise im Bereich der freien Enden (5) der Arme (6) angeordnet ist und wobei zum Kippen der Schaufel (4) ein an den Armen (6) abgestützter und an der Schaufel (4) angreifender Druckmittelmotor (23) vorgesehen ist, dadurch gekennzeichnet, daß der Zylinder des Druckmittelmotors (23) an seinem der Kolbenstange (31) gegenüberliegenden Ende veschwenkbar mit den nach unten ausschwenkbaren Enden (26) von frei schwenkbaren Lenkern (24) verbunden ist, die ihrerseits mit ihren anderen Enden über Anlenkpunkte an den Armen (6) verschwenkbar gelagert sind, wobei sich die Lenker (24) in Richtung der Druckkraft des Druckmittelmotors (23) ausrichten.

2. Schaufel nach Anspruch 1, dadurch gekennzeichnet, daß der Anlenkpunkt (25) der Lenker (24) an den Armen (6) von der Kippachse der Schaufel (4) weiter entfernt ist als der Angriffspunkt (32) der Kolbenstange (31) an der Schaufel (4).

3. Schaufel nach Anspruch 1 oder 2, dadurch gekennzeichnet, daß wenigstens eine Zugfeder (28) vorgesehen ist, die zwischen dem Rahmen (7) und der Schaufel (4) gespannt ist und von unten an wenigstens einem Ansatz (27) anliegt, der im kolbenstangenseitigen Bereich am Zylindermantel des Druckmittelmotors (23) angeordnet ist.

4. Schaufel nach Anspruch 3, dadurch gekennzeichnet, daß der Ansatz (27) eine Rolle oder ein Gleitblech ist.

5. Schaufel nach einem der Ansprüche 1 bis 4, dadurch gekennzeichnet, daß der Oberlenker der Dreipunktaufhängung als Druckmittelmotor (10) ausgebildet ist.

6. Schaufel nach einem der Ansprüche 1 bis 5, dadurch gekennzeichnet, daß die Arme (6), an welchen die Schaufel (4) kippbar gelagert ist, als Druckmittelmotore ausgebildet sind, wobei die Lager der Schaufel (4) an den freien Enden der Kolbenstangen der Druckmittelmotore vorgesehen sind.

7. Schaufel nach einem der Ansprüche 1 bis 6, dadurch gekennzeichnet, daß wenigstens eine Feder vorgesehen ist, welche die Schaufel (4) in ihre Ausgangsstellung zieht, in der der Boden der Schaufel (4) im wesentlichen parallel zu den Armen (6) ausgerichtet ist.

**Claims**

1. Tilting loader bucket (22) for attachment to a motor vehicle, especially an agricultural tractor (1), by means of the three-point hitch (2) thereof, wherein the bucket (4) is mounted to tilt on arms (6) which project out at right angles from the vehicle from a frame (7) fixed to the three-point hitch (2) and arranged in its base position substantially perpendicular to the plane of travel, and wherein the tilt axis, which is aligned transversely relative to the direction of travel and is horizontal, is arranged in the halves of the arms remote from the frame (7), preferably in the region of the free ends (5) of the arms (6), and wherein a pressure medium motor (23) is provided for tilting the bucket (4), this motor being supported by the arms (6) and engaging the bucket (4), characterized in that the cylinder of the pressure medium motor (23) is pivotally connected at its end remote from the piston rod (31) to the ends of freely swinging links (24) which can swing down and are for their part pivotally mounted at their other ends at hinge points on the arms (6), the links (24) extending in the direction of application of force by the pressure medium motor (23).

2. A bucket according to claim 1, characterized in that the hinge point (25) of the links (24) on the arms (6) is further from the tilt axis of the bucket (4) than the point of engagement (32) of the piston rod (31) with the bucket (4).

3. A bucket according to claim 1 or 2, characterized in that at least one tension spring (28) is provided, tensioned between the frame (7) and the bucket (4) and bearing from below on at least one abutment (27) which is arranged on the cylinder jacket of the pressure medium motor (23) in the region of the piston rod end.

4. A bucket according to claim 3, characterized in that the abutment (27) is a roller or a slide plate.

5. A bucket according to any of claims 1 to 4, characterized in that the upper link of the three-point hitch is formed as a pressure medium motor (10).

6. A bucket according to any of claims 1 to 5, characterized in that the arms (6) on which the bucket (4) is mounted for tilting are formed as pressure medium motors, wherein the bearings of the bucket (4) are provided at the free ends of the piston rods of the pressure medium motors.

7. A bucket according to any of claims 1 to 6, characterized in that at least one spring is provided, which draws the bucket (4) into its initial position in which the bottom of the bucket (4) is aligned substantially parallel to the arms (6).

**Revendications**

1. Pelle basculante de chargement (22) destinée à être fixée à un véhicule automobile, en particulier à un tracteur agricole (1) par le mécanisme d'attelage à trois points (2) de ce dernier, dans laquelle la pelle (4) est montée basculante sur des bras (6) qui s'étendent perpendiculairement au véhicule à partir d'un cadre (7) fixé au mécanisme d'attelage à trois points (2) et disposé à sa position de base essentiellement perpendiculairement au plan de déplacement du véhicule, et dans laquelle l'axe de basculement est horizontal et placé transversalement à la direction de déplacement du véhicule et il est disposé dans les moitiés des bras éloignées du cadre (7), avantageusement dans la zone des extrémités libres (5) des bras (6), et dans laquelle un vérin à fluide sous pression (23) prenant appui sur les bras (6) et agissant sur la pelle (4) est prévu pour le basculement de la pelle (4), caractérisé en ce que le cylindre du vérin à fluide sous pression (23) est monté pivotant à son extrémité opposée à la tige de piston (31), sur les extrémités (26) pouvant pivoter vers le bas de leviers (24) libres en pivotement qui, par leurs autres extrémités, sont eux mêmes articulés pour pivoter en des points d'articulation sur les bras (6), dans laquelle les leviers (24) s'orientent dans le sens de la force de poussée du vérin à fluide sous pression (23).

2. Pelle selon la revendication 1, caractérisée en ce que le point d'articulation (25) des leviers (24) sur les bras (6) est plus éloigné de l'axe de basculement de la pelle (4) que le point d'action (32) de la tige de piston (31) sur la pelle (4).

3. Pelle selon la revendication 1 ou 2, caractérisée en ce qu'au moins un ressort de traction (28) est prévu, qui est tendu entre le cadre (7) et la pelle (4) et vient s'appliquer par le dessous contre au moins une saillie (27) qui est disposée sur le cylindre du vérin à fluide sous pression, (23) dans la zone située du côté de la tige de piston.

4. Pelle selon la revendication 3, caractérisée en ce que la saillie (27) est un galet ou une plaque de glissement.

5. Pelle selon une quelconque des revendications 1 à 4, caractérisée en ce que le levier supérieur de l'attelage à trois points est un vérin à fluide sous pression (10).

6. Pelle selon une quelconque des revendications 1 à 5, caractérisée en ce que les bras (6) sur lesquels la pelle (4) est montée basculante sont des vérins à fluide sous pression, les paliers de la pelle (4) étant prévus aux extrémités libres des tiges de piston des vérins à fluide sous pression.

7. Pelle selon une quelconque des revendications 1 à 6, caractérisée en ce qu'il est prévu au moins un ressort qui rappelle la pelle (4) à sa position de départ à laquelle le fond de cette pelle (4) est disposé sensiblement parallèlement aux bras (6).

Fig.1

Fig.2

Fig.3

Fig.4

Fig.5